# EUROPEAN PATENT APPLICATION

(11) **EP 2 562 705 A1**
(43) Date of publication of application: **27.02.2013**
(21) Application number: 11306064.4
(22) Date of filing: 25.08.2011
(51) Int. Cl.: G06Q 30/00

(54) **A method and system for planning and booking trips**

(71) Applicant: Amadeus S.A.S., 06410 Biot (FR)
(72) Inventor: Hirmer, Stephan, 06160 Juan Les Pins (FR); Eski, Elona, 06160 Juan Les Pins (FR); Geraci, Frederic, 06370 Mouans Sartoux (FR); Mikaelian, Jerome, 06410 Biot (FR); Pierlot, Loic, 06670 St Martin du Var (FR); Felix, Fabien, 06130 Grasse (FR); Maillot, Nicolas Eric, 06250 Mougins (FR)
(74) Representative: Anderson, Angela Mary

(57) **Abstract**

A method and system for planning and booking a trip, voyage or other travel service or product by using a social network on a network.

## Description

### Field of the invention

The present invention relates to a method and system for planning and booking trips by using social networks on the Internet.

### Background of the invention

Nowadays, users book trips by using websites which provide travel booking services on the Internet. A user can then create and organize the trip by choosing several criteria such as date, destination, cost, etc from all the available criteria on the website. However, a user has to manually enter the data in a specific user interface each time a search is carried out. In addition, some of the criteria on the website may be missing when the user requests a specific criterion, such as a specific hotel or connection airport between two flights, etc. Such problems are compounded when many users decide to book a trip as a group of users travelling together. All the preferences of all the users within the group need to be managed while processing the booking. As a result, the booking process for such groups is a manual process which is very time consuming.

Travel agents generally have a better understanding of criteria needed by users as travel agents can provide more customized specific booking services with adapted criteria. As travel agents can use adapted criteria to search for trips, they can provide trips which match the criteria of the users more accurately than the above mentioned websites. In addition, travel agents can advise the users by suggesting a specific low cost trip by using a trip package, for example. A trip package may include the booking of other services in addition to booking a trip. For example, booking a hotel room or renting a car. However, travel agents do not have specific access to users who wish to organize and book travel for one or more users. Travel agents always have to wait for a request to book a trip. Online social networks on the Internet are now very popular. Users who subscribe to such social networks always indicate personal details referring to their preferences in different domains or activities such as travelling, for example. However, such information regarding the travel preferences of groups of users is not generally used or optimized in the travel booking domain.

### Objects of the invention

One aspect of the present invention is to overcome at least some of the problems associated with the prior art.

### Summary of the invention

The present invention provides a system and method as set out in the accompanying claims.

According to one aspect of the present invention there is provided a system for at least one user to search for a trip from at least one travel agency for booking, the user having a user communication device, the travel agency having a travel agency server; the user communication device and the travel agency server being able to communicate indirectly through at least one online social network having a social network server which is connectable with the user communication device and a travel provider server, wherein the travel provider server is connected to at least one travel agency server, wherein the social network server stores a first set of data in a first format associated with the user, and wherein the travel provider server is capable of storing at least one trip request associated with the user and at least one trip proposal from the travel agency both comprising a second set of data in a second format and associated with one or more travel agency, wherein the travel provider server comprises a structuring system comprising a data retrieval module for retrieving at least one first set of data from at least one user, a structuring module for analysing the first set of data and a merging module for formatting the first set of data into a third set of data in the second format for each user; a search module for comparing the third set of data with the second set of data of the one or more travel proposals to determine a list of one or more matching travel proposals for each user; a communication module for transmitting the list of matching travel proposals to the travel provider server for transmission to the social network server to display the list of matching travel proposals on the user communication device for selection of a preferred matching travel proposal and for setting up a direct communication between the user communication device and the travel agency to enable the user to book the trip.

### Brief description of the drawings

Reference will now be made, by way of example, to the accompanying drawings, in which:
Figure 1 shows an overview of a system, in accordance with an embodiment of the present invention, given by way of example;
Figure 2 shows an overview of the travel provider system, in accordance with one embodiment of the invention, given by way of example;
Figure 3 shows an overview of the structuring system, in accordance with one embodiment of the invention, given by way of example
Figure 4 is a flow chart of the method steps in accordance with one embodiment of the present invention.

### Detailed description of the preferred embodiments

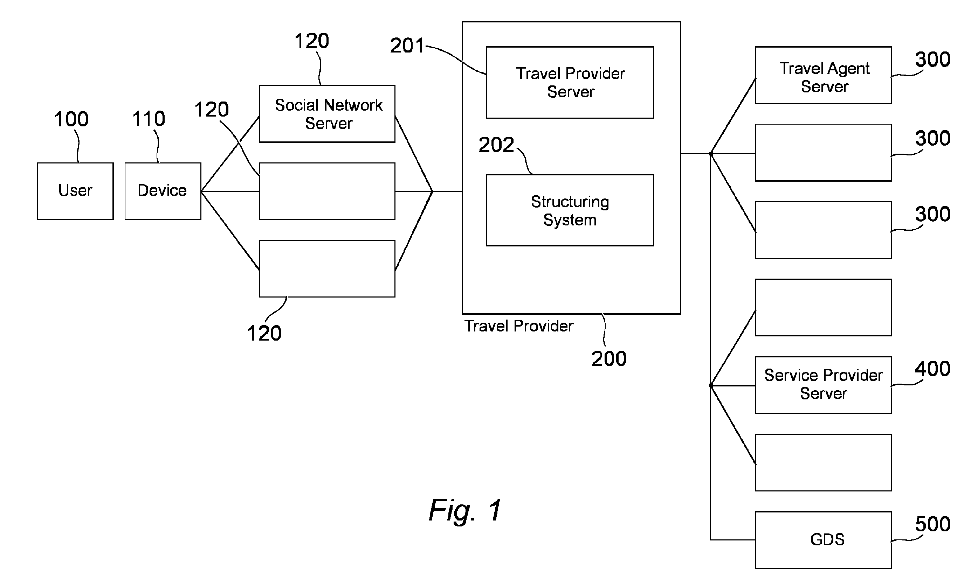

Figure 1 discloses a user 100 who can use a device 110 which may be a computer, a mobile phone or a personal digital assistant. The device 110 can connect to the Internet and to one or more social network servers 120 on the Internet to access the website of the corresponding online social network such as Facebook™, Linkedln™, etc. If the user 100 wants to contact users belonging to the online social network, the user 100 has to subscribe to the online social network by creating and registering a profile on the website of the online social network to become a subscriber. An embodiment of the present invention where a user 100 is a subscriber 100 of an online social network will now be described. The profile of the subscriber 100 includes a first set of data in a first format such as general data to identify the subscriber 100. For example the data may include a name, date of birth, location of the subscriber, etc and personal data which indicate the preferences of the subscriber relating to hobbies, for example sport, cinema, reading, cooking, travelling, etc. The subscriber 100 can decide what type of data can be accessed by other subscribers. The online social network server 120 hosts all the profiles of the subscribers of the online social network.

The social network server 120 provides access to many different servers hosting different application programs. These application programs may relate to games, quizzes or to any other activities to entertain the subscribers of the online social network. A subscriber 100 can request access to a specific server for using a corresponding specific application program. Thus, the subscriber 100 can access and use the application program from the subscriber profile through the social network server. As a result, the subscriber 100 can communicate information related to the application program to other subscribers through the online social network. In the present invention, the social network server 120 hosts a trip planning application program as described below.

In the description, the word "subscriber" corresponds to a subscriber 100 who has already requested an access for using the trip planning application program. In addition, the subscriber 100 always needs to have a subscriber device or a user device 110 to communicate with the social network server 120.

As shown in figure 1, one social network server 120 connects a travel provider entity 200. The travel provider entity 200 is a novel and inventive technical feature of the present application. The social network server 120 operates as a gateway between the user device 110 and the travel provider entity 200. The social network server 120 can forward a request from the subscriber device 110 to the travel provider entity 200. The social network server 120 can also receive a request from the travel provider entity 200 to access the profile of the subscriber 100.

The travel provider entity 200 comprises a travel provider server 201 and a structuring system 202.

The nature and the functions of the travel provider server 201 will now be described.

The travel provider server 201 is connected to at least one travel agent server 300. The travel provider server 201 is further connected to at least one service provider server 400. Each travel agent server 300 corresponds to a specific travel agency. Each service provider server 400 corresponds to a specific service provider such as a theatre booking agency or a museum booking agency.

The travel provider server 201 is connected to a Global Distribution System (GDS) server 500 as is known in the prior art. The GDS server 500 is a platform for providing services such as booking flights, hotel rooms or rental cars and selling airline tickets to users. The GDS server 500 may belong to a specific travel provider company such as Amadeus™, Galileo™, Sabre™.

The travel provider server 201 comprises specific modules and databases to process requests from the user device 110 that are to pass to the travel provider server 201 through the social network server 120. The structure of data stored in the databases of the travel provider server 201 will be described in more detail below.

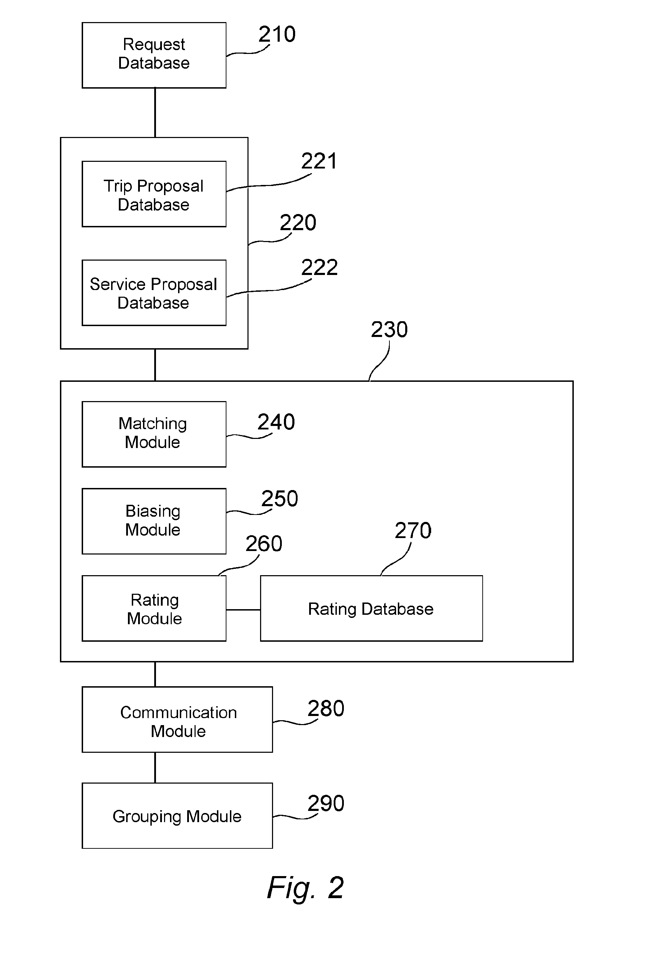

As shown in figure 2, the travel provider server 201 comprises a request database 210, a proposal database 220 which comprises a trip proposal database 221 and a service proposal database 222 which will be described below. The travel provider server 201 also comprises a search module 230 which comprises a matching module 240. The search module 230 comprises a first refining module which is a biasing module 250. The search module 230 also comprises a second refining module which is a rating module 260 which is connected a rate database 270. The travel provider server further comprises a communication module 280 and a grouping module 290. The modules 230, 240, 250, 260 and the rate database 270 will also be described below.

The request database 210 stores the requests from the subscribers 100 of the social network server 120. The requests comprise trip requests and completion requests relating to service requests. The requests comprise another set of data relating to specific requirements or criteria for one or more trip requests or for one or more completion requests. The requirements may be a destination, a date, a specific activity, a range of prices, etc.

The proposal database 220 comprises a trip proposal database 221 for storing trip proposals from travel agencies. Each travel agent server 300 provides specific data, as a second set of data in a second format, corresponding to specific trip proposals. The trip proposal database 221 represents an extract of trip proposals the travel agencies may provide to subscribers 100.

The proposal database 220 also comprises a service proposals database 222 for storing service proposals from service providers. Each service provider 400 provides specific data corresponding to specific service proposals. The service proposal database 222 represents an extract of services proposals the service provider may provide to subscribers 100.

The search module 230 deals with the requests stored in the proposals database 220. The subscriber 100 can request a trip proposal by sending a trip enquiry through the trip planning application to the search module 230. The search module 230 then carries out a search in the trip proposal database 221.

In the situation where the subscriber 100 wants to later add a request for a specific service to a retrieved trip proposal, the subscriber 100 can also send a completion request to the search module 230. The completion request comprises a service request. The search module 230 then searches one or more matching service proposals in the proposal database 222.

The search module 230 comprises a matching module 240. The matching module 240 compares the trip requests stored in the trip proposal database 210 with the proposals stored in the proposal database 220. The matching module 240 retrieves from the proposal database 220 trip proposals matching either all the requirements or some of the requirements as specified in the requests. As a result, the matching module 240 determines a first list of matching trip proposals.

The matching module 240 comprises a biasing module 250. The biasing module 250 processes the first list of matching trip proposals by comparing the requirements of each matching trip proposal with the personal data as stored in the subscriber profile. The biasing module 250 removes from the first list of matching trip proposals any trip proposal that does not match the personal data of the corresponding subscriber 100. As a result, the biasing module 250 provides a second list of matching trip proposals which matches the personal data of the subscriber 100.

The matching module 240 also comprises a rating module 260. The rating module 260 is connected to a rating database 270 which stores ratings relating to the quality of services provided by the travel agencies. The subscribers 100 can populate the rating database 270 with comments and feedbacks and a corresponding rating. The rating module 260 operates on the second list of matching trip proposals. The rating module 260 analyses the names of the travel agencies which have provided trip proposals and ranks the matching trip proposals of the second list based on the rating of the travel agencies in the rating database 270. As a result, the rating module 260 provides a third list of matching trip proposals.

The travel provider server 201 also comprises a communication module 280 which sends back the results of the search, i.e. matching trip proposals, to the subscriber through the travel provider server 201 and the social network server 120. The communication module 280 sends the matching trip proposals from the third list of matching trip proposals via any appropriate means such as messages, emails or specific notifications in the subscriber profile. As a result, the subscriber 100 can display the matching trip proposals on the subscriber device 110 for selecting the preferred trip proposal. After receiving the messages, the subscriber 100 can directly contact the travel agency to request amendments to the trip proposal such as changing the dates or to ask for details.

The travel provider server 201 further comprises a grouping module 290 which can analyse the completion requests or service requests as stored in the requests database 210. This allows the different natures of requested services such as a request for buying ticket for a specific activity or a request for renting a car, etc to be determined. As a result, the grouping module 290 can rank the completion requests to determine the most frequently requested services in the completion requests. The grouping module 290 uses this ranking to send specific messages such as emails or notification messages to the service providers providing the most frequently requested services. The aim of the messages is to indicate to the service providers that their specific service is often requested as an additional service to a specific trip proposal. The grouping module 290 suggests to the service provider that a global proposal may be built by including the trip proposal and the service at the same time. The service provider is then free to contact the travel agency offering the corresponding trip proposal to negotiate the global proposal which may be added to the trip proposal database 221.

The grouping module 290 can create a group relating to several users requesting the same trip proposal. The grouping module 290 can also create a group relating to several service providers each providing a part of a whole service request.

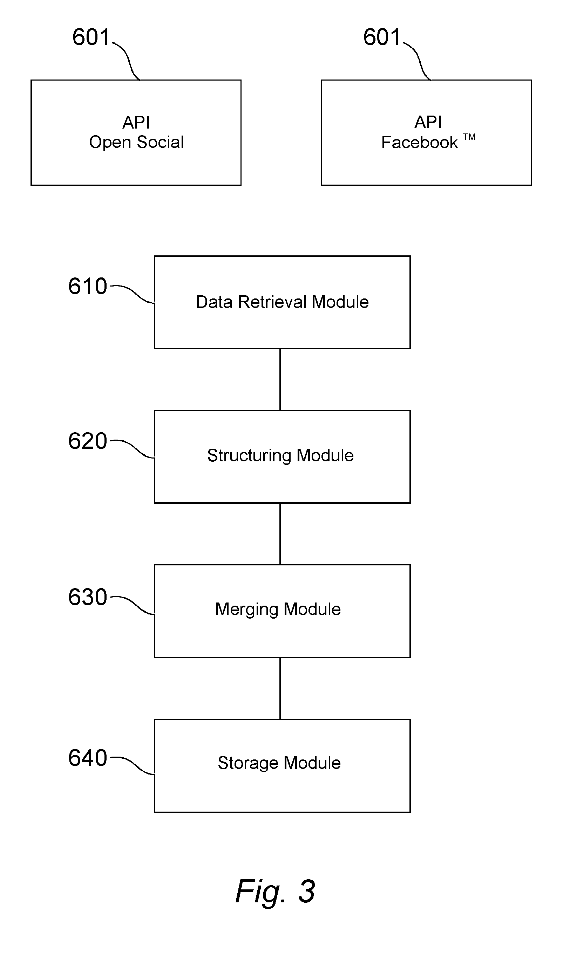

The nature and functions of the structuring system 202 will now be described. Figure 3 shows a specific structuring process, including a formatting process which operates on the data stored in the various social networks. The travel provider server 200 can store requests from subscribers and proposals from travel agencies to find a match between at least one request and one proposal. On one hand, the data relating to the subscribers is stored on the social network server in a format adapted to the corresponding social network. Thus, if the user subscribes to several social networks, the data related to the subscriber may have a different format corresponding to each social network. On the other hand, the proposals from the travel agencies comprise data that is in a specific format such as the format adapted to the travel domain. As a result, the travel provider server 201 has to store requests from the subscribers and proposals from the travel agencies in a consistent format to allow operations such as, for example, matching requests and proposals, searching requests, searching proposals, etc. Another profile related to the subscriber may also be stored in the GDS server 500.

The structuring process operates with the corresponding structuring system 202 which includes a data retrieval module 610, a structuring module 620, a merging module 630 and a storage module 640.

Specific application program interfaces (APls) operate between the social network servers and the structuring system 202. The application program interfaces may be common application program interfaces such as OpenSocial™ application program interfaces 601 or a specific application program interface 602 dedicated to a specific social network such as Facebook™. APls allow the data retrieval module 610 to extract data set from the various social network profiles stored in the corresponding social network servers 120.

The data retrieval module 610 extracts the first set of data from the social network profiles such as name, date of birth, location, personal preferences, activities, geographical location of friends of the subscriber and information about any applications already accessible from the profiles of the subscriber. The first set of data is in a first format.

The structuring module 620 analyses the extracted data with parsing and semantic techniques. Each social network uses a specific format for displaying and storing subscribers' profile data. As a result, the structuring module 620 has to identify the type of the extracted data in relation with each different social network. The structuring module 620 can then gather all the data referring to the name of the subscriber, the personal data, etc. for all the different social networks into a second homogeneous format. As a result, the structuring module 620 builds a structured second data set for each type of extracted data related to a specific social network, for the same subscriber. As a result, the structuring module 620 formats the extracted data from each social network to provide a structured second data set having a homogenous format. The homogeneous format is the same for all the extracted data from various social networks.

The merging module 630 operates two different merging processes. The first merging process merges the structured first data sets from the various social networks, for the same subscriber. As the structured first data sets have the same format, the merging module 630 can merge the different structured first data sets from the various social networks to obtain a merged data set for the same subscriber. The merged data set comprises all the data from the different profiles of the different social networks for the same subscriber. The merged data set constitutes a unique profile in a second format for the same subscriber. The merging process may generate additional information, i.e. cross-network information which has to be added to the unique profile. For example, in the situation where a subscriber has a profile on Facebook™, which is mainly used by students and also another profile in Linkedln™, which is mainly used by professionals, the merging module 630 can derive that the subscriber has very recently been a student or still is a student and is also currently looking for a job or has started working recently. This additional information, which is not specifically mentioned in any profiles of the subscriber, may give rise to new data related to the subscriber such as new preferences, new activities, etc which add to the unique profile of the subscriber.

The storage module 640 stores all the unique profiles in the second format for each subscriber 100.

The travel agency server 300 comprises a second data set related to trip proposals in the same second format. As a result, the travel provider server 201 can proceed as previously described to determine matching trip proposals for trip requests.

The second merging process merges the unique profile of a subscriber with the potential existing profile of the subscriber in the GDS. If the subscriber already has a profile in the GDS, the second merging process enriches the existing profile of the GDS. If the subscriber does not have a profile in the GDS, the unique profile generates a profile in the GDS for the specific subscriber.

Different embodiments of the present system related to one social network server 120 will now be described. The embodiments can also apply when several social network servers are considered.

### First embodiment

The first embodiment describes a communication process between the user device 110, the travel provider server 201, a social network server 120 and the travel agent server 300.

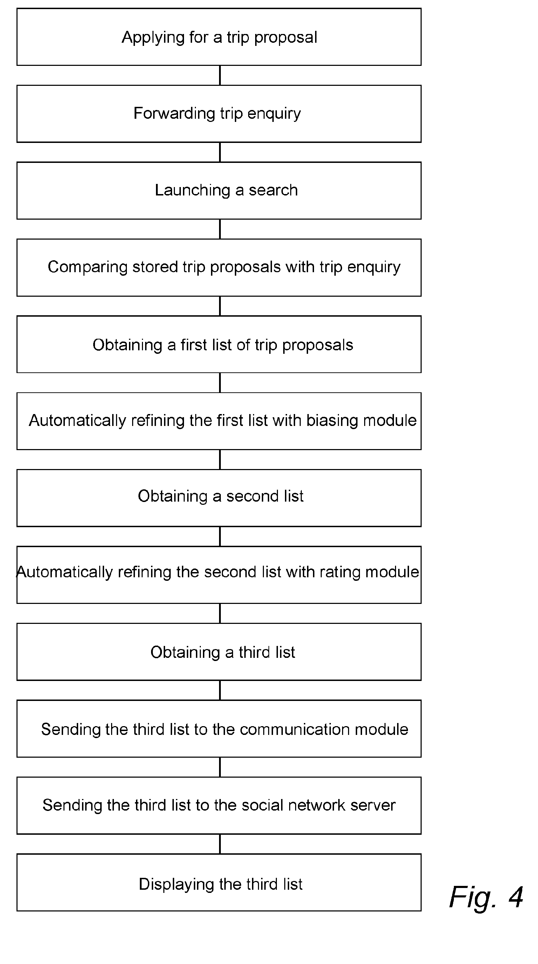

In the first embodiment, the subscriber 100 would like to find a trip proposal matching specific requirements as stored in the trip requests database 210. As shown in figure 4, the subscriber 100 uses the subscriber device 110 to apply for a trip proposal by using the trip application program. The travel provider server 201 receives the trip enquiry and forwards the trip enquiry to the search module 230. Within the search module 230, the matching module 240 launches a search for retrieving a trip proposal from the trip proposal database 221. The matching module 240 compares the stored trip proposals from the trip proposal database 220 with the trip requests stored in the request database 210 to find a first list of matching trip proposals. The biasing module 250 then refines the first list of matching trip proposals based from the personal data of the subscriber 100 to produce a second list of matching trip proposals. The biasing module 250 may remove some trip proposals from the first list of matching trip proposals. The rating module 270 then refines the second list of matching trip proposals based on the rating database 270 to produce a third list of matching trip proposals. The process of the rating module 270 comprises the determination of the name of the travel agencies for each matching trip proposal of the second list and checking the rating for each travel agency as stored in the rating database 270. The search module 230 sends the third list of matching trip proposals to the communication module 280. The communication module 280 sends a message comprising the third list of matching trip proposals to the travel provider server 200. The travel provider server 200 forwards the message to the social network server 120 which displays the message in the subscriber profile for example. The subscriber 100 can then display the message on the subscriber device 110 to see the trip proposals matching the trip enquiry.

### Second embodiment

The second embodiment discloses a process of finding groups of subscribers relating to a same specific trip request to suggest that subscribers travel together for the specific trip.

In the second embodiment, one or more subscribers 100 have stored requests and do not apply for a trip proposal. The matching module 230 may be programmed to monitor and analyse the requests as stored in the requests database 210. As a result, the matching module 230 may provide a list of similar requests having a predetermined number of matching criteria. The search module 230 transmits the list of similar trip requests to the grouping module 290 to determine the subscribers associated with the similar trip requests. The grouping module 290 then transmits the corresponding list of subscribers to the communication module 280 to send messages to the subscribers through the travel provider server 201 and the social network server 120. As a result, all the subscribers of the list of similar trip requests are informed that they can join together to form a group for applying for the specific trip. Thus, the grouped subscribers may benefit some from a reduction from the travel agency proposing the specific trip proposal.

### Third embodiment

The third embodiment discloses an automatic search of trip proposals matching specific trip requests to communicate the matching trip proposals to the subscriber 100.

In the third embodiment, a subscriber has one or more requests stored in the request database 210. The subscriber 100 does not have to apply for a trip proposal to launch the process in this embodiment. In the search module 230, the matching module 240 may be programmed to monitor and analyse the stored requests in the request database 210 and the trip proposals as stored in the trip proposal database 221 to find a list of matching trip proposals. The biasing module 250 and the rating module 260 also process the list of matching trip proposals to determine a final list of trip proposals as described above. The search module 230 then sends the final list to the communication module 280 which in turn sends the final list to the corresponding subscriber 100.

### Fourth embodiment

The fourth embodiment is similar to the third embodiment, although in this embodiment, a subscriber 100 does not have any stored trip requests in the request database 210.

The subscriber does not have any requests stored in the request database 210 and does not apply for any trip proposal. In the search module 230, the matching module 240 may be programmed to monitor and analyse the data of the subscriber profile and the trip proposals as stored in the trip proposals database 321. As soon as the matching engine determines a matching list of trip proposals by using the biasing module 250 and the rating module 260, the search module 230 sends the list to the communication module 280. The communication module 280 sends the list to the corresponding subscriber 100 as a push communication.

### Fifth embodiment

The fifth embodiment discloses a process for providing an additional service to the trip proposal.

In the fifth embodiment, the subscriber 100 has accepted a specific trip proposal. The subscriber 100 can decide to request addition of a service proposal to complete the trip proposal. The subscriber 100 then sends a completion request to the search module 230. The matching module 240 compares the completion request and the service proposals as stored in the service proposal database 222 to find matching service proposals. If the matching module 240 does not find any matching service proposals, the service request remains as pending until a service provider proposes a matching service proposal.

### Sixth embodiment

The sixth embodiment discloses a monitoring process to allow service providers to propose service proposals adapted to stored service requests.

In the sixth embodiment, a subscriber 100 has one or more stored service requests in the request database 210 and a service provider provides a specific service not already stored in the service proposal database 222. The service provider can monitor and check the stored service requests and may use a service matching engine (not shown) to find a service request which matches the specific service. As soon as the service matching engine has found a matching service request, the service provider can contact the subscriber by using the communication module 280. Other service providers providing the same specific service may proceed in the same manner for the same service request. The grouping module 290 can be programmed to monitor the service providers that answer the pending completion requests. The grouping module 290 can then group the service providers proposing the same kind of services. As a result, the grouping module 290 communicates the list of service providers to the communication module 280. The subscriber 100 can accept or refuse the service proposal of a service provider at his convenience.

Each embodiment of the present invention requires a subscriber 100 to request access to a specific server for using the trip planning application program to be able to use the system of the present invention. The aim of the present invention is to find a match through the travel provider entity 200, comprising the travel provider server 201 and the structuring system 202, between the subscriber trip request and the travel agency travel proposal. When the match occurs and when the subscriber selects the matching travel proposal, the subscriber can decide to directly communicate with the travel agency to finalize the planning of the trip by booking the trip.

The present invention has been described with reference to both software programs and applications and hardware modules. It will be appreciated that the functions carried out as part of the invention could be carried out in either software or hardware modules or any combination thereof, irrespective of the examples given herein.

It will be appreciated that there are many variations of the various features described above, which can fall within the scope of the present invention

## Claims

1. A system for at least one user (100) to search for a trip from at least one travel agency for booking, the user (100) having a user communication device (110), the travel agency having a travel agency server (300); the user communication device (110) and the travel agency server (300) being able to communicate indirectly through at least one online social network having a social network server (120) which is connectable with the user communication device (110) and a travel provider server (201), wherein the travel provider server (201) is connected to at least one travel agency server (300), wherein the social network server (120) stores a first set of data in a first format associated with the user (100), and wherein the travel provider server (201) is capable of storing at least one trip request associated with the user (100) and at least one trip proposal from the travel agency both comprising a second set of data in a second format and associated with one or more travel agency, wherein the travel provider server (201) comprises:
- a structuring system (202) comprising a data retrieval module (610) for retrieving at least one first set of data from at least one user, a structuring module (620) for analysing the first set of data and a merging module (630) for formatting the first set of data into a third set of data in the second format for each user;
- a search module (230) for comparing the third set of data with the second set of data of the one or more travel proposals to determine a list of one or more matching trip proposals for each user (100);
- a communication module (280) for transmitting the list of matching trip proposals to the travel provider server (201) for transmission to the social network server (120) to display the list of matching trip proposals on the user communication device (110) for selection of a preferred matching trip proposal and for setting up a direct communication between the user communication device (100) and the travel agency to enable the user (100) to book the trip.

2. The system of claim 1, further comprising a grouping module (290) for grouping users (100) requesting the same trip requests.

3. The system of any of claims 1 or 2, wherein the search module (230) comprises a biasing module (250) to compare the requirement of the first set of data with the matching trip proposals for each user (100).

4. The system of any preceding claims, wherein the search module (230) further comprises a rating module (260) and a rating database (270) storing rating of the travel agencies, wherein the rating module (260) ranks the matching trip proposals based on the quality of services provided by the travel agencies.

5. The system of any preceding claims, wherein the travel provider server (201) comprises a request database (210).

6. The system of claim 5, wherein the request database (210) comprises trip requests and service requests from the user (100).

7. The system of any preceding claims, wherein the travel provider server (201) comprises a proposal database (220).

8. The system of any preceding claims, wherein the proposal database (210) comprises trip proposals from the travel agencies and service proposals from service providers.

9. The system of any preceding claims, wherein the structuring system (202) comprises a storage module (640) to store the third set of data in the second format for each user.

10. The system of any preceding claims, wherein the merging module (630) can generate a profile of the user (100) in a global distribution system (GDS).

11. A method of operating the system of any of claims 1 to 10.

12. A computer program comprising instructions for carrying out the steps of the method of claim 11, when said computer program is executed on a computer system.
